# EUROPÄISCHE PATENTSCHRIFT

(11) **EP 1 818 229 B1**
(45) Veröffentlichungstag und Bekanntmachung des Hinweises auf die Patenterteilung: **18.11.2009**
(21) Anmeldenummer: 07450018.2
(22) Anmeldetag: 08.02.2007
(51) Int. Cl.: B60T 7/10, G05G 5/18

(54) **Handbremseinrichtung**
Handbrake device
Dispositif de frein à main

(30) Priorität: 09.02.2006 AT 1992006
(43) Veröffentlichungstag der Anmeldung: 15.08.2007
(73) Patentinhaber: DGS Druckguss Systeme AG, 9015 St. Gallen (CH)
(72) Erfinder: Pichlbauer, Peter, 9403 Goldach (AT)
(74) Vertreter: Babeluk, Michael

(56) Entgegenhaltungen:
- DE-A1- 2 726 152
- DE-A1- 4 321 610
- DE-C1- 3 545 974

## Beschreibung

Die Erfindung betrifft eine Handbremseinrichtung mit einem eine Arretiervorrichtung aufweisenden Handbremshebel, welche ein Sperrsegment und eine in dieses eingreifende Sperrklinke aufweist, wobei die Sperrklinke mit einer Entriegelungseinrichtung verbunden ist, wobei die Arretiervorrichtung, zumindest teilweise, aus Kunststoff besteht, wobei das Sperrsegment zumindest teilweise aus einem vorzugsweise plastisch oder elastisch verformbaren Kunststoff besteht und wobei der Handbremshebel über einen Lagerzapfen in einem fahrzeugfesten Lagerbock schwenkbar gelagert ist.

Ein Handbremshebel mit einer Arretiereinrichtung, welche aus einem Sperrsegment und einer Sperrklinke besteht, ist beispielsweise aus der DE 103 24 040 A1 bekannt.

Bekannte Handbremshebel weisen ein relativ hohes Gewicht auf, da mechanisch belastete Teile aus Stahlblech gefertigt werden. Kunststoff wird im Allgemeinen nur als Verkleidungselement für die Handbremseinrichtung und für wenig belastete Teile, wie beispielsweise den Druckknopf für die Entriegelungseinrichtung, verwendet. Kunststoff wird im Allgemeinen nur zur Verkleidung und Ummantelung eingesetzt. Der große Anteil an Stahlblechteilen wirkt sich nachteilig auf das Fahrzeuggewicht und die Herstellungskosten aus.

Aus der DE 103 15 233 A1 ist eine Handbremseinrichtung mit einem eine Arretiervorrichtung aufweisenden Handbremshebel bekannt, welche ein Sperrsegment und eine in dieses eingreifende Sperrklinke aufweist, wobei die Sperrklinke mit einer Entriegelungseinrichtung verbunden ist. Das metallische Sperrsegment ist in eine Kunststoffhalterung eingespritzt. Der Handbremshebel ist über einen aus Kunststoff bestehenden Lagerzapfen, welcher eine Verliersicherung aufweist, in einem fahrzeugfesten Lagerbock schwenkbar gelagert, wobei das Sperrsegment mit dem Lagerbock formschlüssig verbunden ist. Die Klinke besteht aus Kunststoff oder aus Metall.

Die US 5,303,610 A zeigt eine Handbremse für ein Fahrzeug mit einem eine Arretiervorrichtung aufweisenden Handbremshebel, welche ein Sperresegment und eine in dieses eingreifende Sperrklinke aufweist, wobei die Sperrklinke mit einer Entriegelungseinrichtung verbunden ist. Die Sperrklinke ist teilweise mit Kunststoff umgossen, um das Betätigungsgeräusch zu vermindern. Die Sperrklinke weist zumindest zwei Sperrhaken auf und ist im Eingriffsbereich mit dem Sperrsegment mit erhöhter Breite ausgeführt.

Weiters ist aus der DE 100 06 827 A1 eine Betätigungsvorrichtung für eine Feststellbremse bekannt, bei der die Sperrklinke über ein Niet gelagert ist.

Die DE 43 21 610 A1 beschreibt eine Handbremse für ein Kraftfahrzeug, welche einen Klinkenmechanismus mit einem Sperrelement und einer Gegenverzahnung aufweist, die aus einem hochbelastbaren Kunststoff bestehen. Die Gegenverzahnung ist an der Kraftfahrzeugkarosserie befestigt und stützt sich über eine Lagerung auf der Lagerstelle des Gehäuses der Handbremse ab.

Aufgabe der Erfindung ist es, diese Nachteile zu vermeiden und das Gewicht des Handbremshebels, sowie dessen Herstellungsaufwand zu verringern.

Erfindungsgemäß wird dies dadurch erreicht, dass das Sperrsegment mit dem Lagerbock über eine erste Formschlussverbindung verbunden ist, wobei die erste Formschlussverbindung als Schnappverbindung ausgebildet ist. Dies ermöglicht eine sichere Verbindung.

Eine sichere Verbindung wird ermöglicht, wenn die erste Formschlussverbindung ein, besonders vorzugsweise am Sperrsegment vorgesehenes Hakenelement aufweist, welches an einer vorzugsweise durch den Lagerbock gebildeten Rastkante angreift.

Um eine starre und spielfreie Verbindung zu ermöglichen, kann vorgesehen sein, dass das Sperrsegment über eine als Steckverbindung ausgebildete zweite Formschlussverbindung mit dem Lagerbock formschlüssig verbunden ist, wobei vorzugsweise das Sperrsegment im Bereich der zweiten Formschlussverbindung ein erstes Formschlusselement mit vorzugsweise eckigem, besonders vorzugsweise rechteckigem Querschnitt aufweist, welches mit einem entsprechend reziprok geformten zweiten Formschlusselement des Lagerbockes zusammenwirkt und an diesem angreift, wobei das erste Formschlusselement in das zweite Formschlusselement einführbar sein kann. Zur spielfreien Einpassung des Sperrsegmentes im Lagerbock ist es vorteilhaft, wenn das erste Formschlusselement und/oder zweite Formschlusselement vorzugsweise zumindest einen zahn- oder leistenartigen Vorsprung aufweist, welcher am reziprok geformten zweiten bzw. ersten Formschlusselement, vorzugsweise kraftschlüssig aufliegt.

Die Montage des Sperrsegmentes am Lagerbock kann wesentlich erleichtert werden, wenn das erste und/oder das zweite Formschlusselement und/oder der Vorsprung keilförmig gestaltet ist. Durch die geringe Keilform wird das Einfädeln des Sperrsegmentes am Lagerbock erleichtert.

Auch die Sperrklinke besteht vorteilhafterweise aus einem Kunststoffmaterial. Um zu hohe Flächenpressungen zwischen Sperrklinke und Sperrsegment zu vermeiden, ist es vorteilhaft, wenn die Sperrklinke zumindest zwei Sperrhaken aufweist, wobei vorzugsweise die Sperrklinke im Eingriffsbereich mit dem Sperrsegment verstärkt, vorzugsweise mit erhöhter Breite, ausgeführt ist.

Zur Vereinfachung der Fertigung kann weiters vorgesehen sein, dass der Lagerzapfen aus Kunststoff besteht und vorzugsweise durch eine Kunststoffniete gebildet ist. Als Verliersicherung kann ein Aufschmelzbereich am Ende der Kunststoffmitte vorgesehen sein, wobei das Aufschmelzen zum Beispiel durch Ultraschall erfolgen kann.

Ferner kann im Rahmen der Erfindung vorgesehen sein, dass der Haltebolzen als Kunststoffteil ausgebildet ist, wobei vorzugsweise die Verliersicherung durch einen Aufschmelzbereich des Haltebolzens gebildet ist.

Die Erfindung wird im Folgenden anhand der Figuren näher erläutert. Es zeigen:

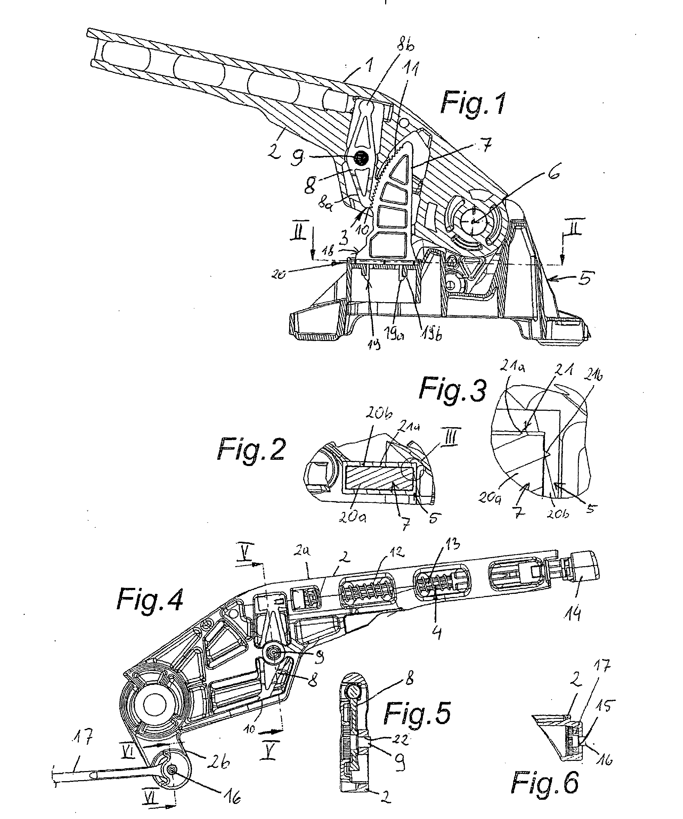

- Fig. 1: eine erfindungsgemäße Handbremseinrichtung;
- Fig. 2: die Handbremseinrichtung in einem Schnitt gemäß der Linie II - II in Fig. 1;
- Fig. 3: das Detail III aus Fig. 2;
- Fig. 4: einen Handbremshebel der erfindungsgemäßen Handbremseinrich-tung in einer Seitenansicht;
- Fig. 5: den Handbremshebel in einem Schnitt gemäß der Linie V - V in Fig. 4; und
- Fig. 6: den Handbremshebel in einem Schnitt gemäß der Linie VI - VI in Fig. 4.

Die Handbremseinrichtung 1 weist einen Handbremshebel 2 mit einer Arretiervorrichtung 3 und einer Entriegelungseinrichtung 4 auf. Der beispielsweise aus Leichtmetall bestehende Handbremshebel 2 ist in einem Lagerbock 5 schwenkbar um eine Achse 6 gelagert.

Die Arretiereinrichtung 3 besteht aus einem Sperrsegment 7 und einer mit dem Sperrsegment 4 zusammenwirkenden Sperrklinke 8, welche im Wesentlichen als zweiarmiger Hebel ausgebildet ist. Die Sperrklinke 8 ist mittels eines Lagerzapfens 9 drehbar im Handbremshebel 2 gelagert. Die Sperrklinke 8 weist an dem dem Sperrsegment 7 zugewandten Ende 8a mehrere, beispielsweise zwei Sperrhaken 10 auf, welche in Sperrzähne 11 des Sperrsegmentes 7 eingreifen. Die Sperrklinke 8 ist über die an dem Sperrsegment 7 abgewandten Ende 8b der Sperrklinke 8 angreifende Entriegelungseinrichtung 4 entriegelbar, wobei die Entriegelungseinrichtung 4 im vorliegenden Beispiel eine durch eine Feder 12 belastete, im Bremshebel verschiebbar gelagerte Druckstange 13 aufweist, welche über einen Druckknopf 14 betätigbar ist.

Der Handbremshebel 2 weist einen längeren Hebelsarm 2a und einen kürzeren Hebelsarm 2b auf. Am kürzeren Hebelsarm 2b ist eine Aufnahmebohrung 15 zur Aufnahme eines Haltebolzens 16 vorgesehen, über welchen ein Bremsseil 17 am Handbremshebel 2 befestigt ist.

Das Sperrsegment 7 und der Lagerbock 5 sind als getrennte Bauteile ausgeführt. Das Sperrsegment 7 weist in einem den Sperrzähnen 11 abgewandten Ende einen Befestigungsbereich 18 auf, über welchen das Sperrsegment 7 mit dem Lagerbock 5 fest verbunden ist. Die Befestigung des Sperrsegmentes 7 am Lagerbock erfolgt dabei vor allem formschlüssig über eine erste Formschlussverbindung 19 und eine zweite Formschlussverbindung 20. Die erste Formschlussverbindung ist als Schnappverbindung mit zwei Rasthaken 19a ausgebildet, welche jeweils an einer Rastkante 19b angreifen. Im vorliegenden Beispiel sind die Rasthaken 19 einstückig mit dem Sperrsegment 7 ausgebildet, wobei die Rastkante 19b durch den Lagerbock 5 gebildet werden.

Die zweite Formschlussverbindung 20 besteht im Wesentlichen aus einer Steckverbindung, mit einem ersten, beispielsweise rechteckigen Formschlusselement 20a, welches in ein entsprechend reziprok geformtes zweites Formschlusselement 20b einsteckbar ist, welches im Beispiel durch den Lagerbock 5 gebildet wird. Selbstverständlich ist es auch denkbar, dass die Rasthaken 19a und/oder das erste Formschlusselement 20a durch den Lagerbock 5 und die Rastkanten 19b und/oder das zweite Formschlusselement 20b durch das Sperrsegment 7 gebildet werden.

Durch die erste und zweite Formschlussverbindungen 19, 20 kann bereits eine starre und unverlierbare Verbindung zwischen Sperrsegment 7 und Lagerbock 5 hergestellt werden.

Zusätzlich kann auch eine Kraftschlussverbindung 21 vorgesehen sein. Die Kraftschlussverbindung 21 entsteht im vorliegenden Beispiel durch zahn- oder leistenartige Vorsprünge 21a, 21b am Sperrsegment 7, welche bei der Montage des Sperrsegmentes 7 am Lagerbock 5 elastisch und/oder plastisch verformt und somit gegen den Lagerbock 5 gepresst werden.

Um ein einfaches Befestigen des Sperrsegmentes 7 am Lagerbock 5 zu ermöglichen, kann vorgesehen sein, dass das erste und/zweite das zweite Formschlusselement 20a, 20b und/oder die zahn- oder leistenartigen Vorsprünge 21a, 21b in Aufsteckrichtung keilförmig geformt sind, so dass ein zu Beginn des Montagevorganges sich ausbildender Spalt zwischen ersten und zweiten Formschlusselement 20a, 20b mit fortschreitender Aufsteckbewegung verkleinert bzw. eliminiert wird.

Um das Gewicht der Handbremseinrichtung 1 und die Herstellungskosten zu vermindern, bestehen im Ausführungsbeispiel die Elemente Sperrsegment 7, Sperrklinke 8, Lagerzapfen 9 und/oder Haltebolzen 16 aus Kunststoff. Der Handbremshebel 2 und der Lagerbock 5 werden aus Leichtmetall, beispielsweise als Druckgussteil, gefertigt.

Der Lagerzapfen 9 ist in eine Aufnahmebohrung 22 des Handbremshebels 2 eingesetzt und mit einer Verliersicherung gegen Herausfallen gesichert.

Der Lagerzapfen 9 und der Haltebolzen 16 können dabei beispielsweise durch Kunststoffnieten gebildet sein. Dauerhafte und einfach herzustellende Verliersicherungen werden beispielsweise durch Aufschmelzbereiche an den Nietenenden gebildet. Das Aufschmelzen kann etwa durch Ultraschallschweißen erfolgen.

## Patentansprüche

1. Handbremseinrichtung (1) mit einem eine Arretiervorrichtung (3) aufweisenden Handbremshebel (2), welche ein Sperrsegment (7) und eine in dieses eingreifende Sperrklinke (8) aufweist, wobei die Sperrklinke (8) mit einer Entriegelungseinrichtung (4) verbunden ist, wobei die Arretiervorrichtung (3), teilweise, aus Kunststoff besteht, wobei das Sperrsegment (7) teilweise aus einem plastisch oder elastisch verformbaren Kunststoff besteht und wobei der Handbremshebel (2) über einen Lagerzapfen (9) in einem fahrzeugfesten Lagerbock (5) schwenkbar gelagert ist, **dadurch gekennzeichnet, dass** das Sperrsegment (7) mit dem Lagerbock (5) über eine erste Formschlussverbindung (19) verbunden ist, wobei die erste Formschlussverbindung (19) als Schnappverbindung ausgebildet ist.

2. Handbremseinrichtung (1) nach Anspruch 1, **dadurch gekennzeichnet, dass** die erste Formschlussverbindung (19) zumindest ein, vorzugsweise am Sperrsegment (7) vorgesehenes Hakenelement (19a) aufweist, welches an einer vorzugsweise durch den Lagerbock (5) gebildeten Rastkante (19b) angreift.

3. Handbremseinrichtung (1) nach einem der Ansprüche 1 oder 2, **dadurch gekennzeichnet, dass** das Sperrsegment (7) über eine als Steckverbindung ausgebildete zweite Formschlussverbindung (20) mit dem Lagerbock (5) formschlüssig verbunden ist.

4. Handbremseinrichtung (1) nach Anspruch 3, **dadurch gekennzeichnet, dass** das Sperrsegment (7) im Bereich der zweiten Formschlussverbindung (20) ein erstes Formschlusselement (20a) mit vorzugsweise eckigem, besonders vorzugsweise rechteckigem Querschnitt aufweist, welches mit einem entsprechend reziprok geformten zweiten Formschlusselement (20b) des Lagerbockes (5) zusammenwirkt und an diesem angreift, wobei vorzugsweise das erste Formschlusselement (20a) in das zweite Formschlusselement (20b) einführbar ist.

5. Handbremseinrichtung (1) nach Anspruch 4, **dadurch gekennzeichnet, dass** das erste Formschlusselement (20a) und/oder zweite Formschlusselement (20b) vorzugsweise zumindest einen zahn- oder leistenartigen Vorsprung (21a, 21b) aufweist, welcher am reziprok geformten zweiten bzw. ersten Formschlusselement (20a, 20b), vorzugsweise kraftschlüssig aufliegt.

6. Handbremseinrichtung (1) nach einem der Ansprüche 3 bis 5, **dadurch gekennzeichnet, dass** das erste und/oder das zweite Formschlusselement (20a, 20b) und/oder der Vorsprung (21a, 21b) keilförmig gestaltet ist.

7. Handbremseinrichtung (1) nach einem der Ansprüche 1 bis 6, **dadurch gekennzeichnet, dass** die Sperrklinke (8) zumindest teilweise aus einem Kunststoff besteht.

8. Handbremseinrichtung (1) nach einem der Ansprüche 1 bis 7, **dadurch gekennzeichnet, dass** die Sperrklinke (8) zumindest zwei Sperrhaken (10) aufweist.

9. Handbremseinrichtung (1) nach einem der Ansprüche 1 bis 8, **dadurch gekennzeichnet, dass** die Sperrklinke (8) im Eingriffsbereich mit dem Sperrsegment (7) verstärkt, vorzugsweise mit erhöhter Breite, ausgeführt ist.

10. Handbremseinrichtung (1) nach einem der Ansprüche 1 bis 9, wobei der Handbremshebel (2) über einen Lagerzapfen (9) in einem fahrzeugfesten Lagerbock (5) schwenkbar gelagert ist, **dadurch gekennzeichnet, dass** der Lagerzapfen (9) aus Kunststoff besteht und vorzugsweise durch eine Kunststoffniete gebildet ist.

11. Handbremseinrichtung (1) nach Anspruch 10, **dadurch gekennzeichnet, dass** der Lagerzapfen (9) zumindest eine Verliersicherung aufweist, wobei die Verliersicherung, vorzugsweise durch einen Aufschmelzbereich des Lagerzapfens (9) gebildet ist.

12. Handbremseinrichtung (1) nach einem der Ansprüche 1 bis 11, wobei der Handbremshebel (2) eine Aufnahmeöffnung aufweist, in welcher ein Haltebolzen (16) für ein Bremsseil (17) verliersicher angeordnet ist, **dadurch gekennzeichnet, dass** der Haltebolzen (16) als Kunststoffteil ausgebildet ist, wobei vorzugsweise die Verliersicherung durch einen Aufschmelzbereich des Haltebolzens (16) gebildet ist.

## Claims

1. Handbrake assembly (1) with a handbrake lever (2) provided with a locking device (3), said device having a locking segment (7) and a locking pawl (8) acting on said locking segment, where the locking pawl (8) is connected to a releasing device (4), and the locking device (3) is partly made of plastics, and the locking segment (7) is partly made of a plastically or elastically deformable plastics material, and where the handbrake lever (2) is tiltably borne in a vehicle-fixed bearing bracket (5) by means of a bearing pin (9), **characterised in that** the locking segment (7) is attached to the bearing bracket (5) by a first positive locking connection (19), said positive locking connection (19) being realised as a snap-on connection.

2. Handbrake assembly (1) according to claim 1, **characterised in that** the first positive locking connection (19) has at least one hook element (19a) preferably provided on the locking segment (7), which hook element (19a) acts on a locking edge (19b) preferably formed on the bearing bracket (5).

3. Handbrake assembly (1) according to any of claims 1 or 2, **characterised in that** the locking segment (7) is positively attached to the bearing bracket (5) by means of a second positive locking connection (20) configured as a plug-in connection.

4. Handbrake assembly (1) according to claim 3, **characterised in that** the locking segment (7) has a first positive locking element (20a) in the area of the second positive locking connection (20) with preferably angular, in particular rectangular cross-section, which cooperates with and acts on a reciprocally shaped second positive locking element (20b) of the bearing bracket (5), the first positive locking element (20a) preferably being inserted into the second positive locking element (20b).

5. Handbrake assembly (1) according to claim 4, **characterised in that** the first positive locking element (20a) and/or the second positive locking element (20b) preferably are provided with at least one tooth- or ledge-shaped projection (21a, 21b), which rests against the reciprocally shaped second or first positive locking element (20a, 20b), preferably in a friction-locked way.

6. Handbrake assembly (1) according to any of claims 3 to 5, **characterised in that** the first and/or the second positive locking element (20a, 20b) and/or the projection (21a, 21b) is wedge-shaped.

7. Handbrake assembly (1) according to any of claims 1 to 6, **characterised in that** the locking pawl (8) is at least partly made of plastics.

8. Handbrake assembly (1) according to any of claims 1 to 7, **characterised in that** the locking pawl (8) has at least two locking hooks (10).

9. Handbrake assembly (1) according to any of claims 1 to 8, **characterised in that** the locking pawl (8) is reinforced, preferably with increased width, in the area where it engages the locking segment (7).

10. Handbrake assembly (1) according to any of claims 1 to 9, where the handbrake lever (2) is tiltably borne in a vehicle-fixed bearing bracket (5) by means of a bearing pin (9), **characterised in that** the bearing pin (9) is made of plastics and is preferably formed by a plastic rivet.

11. Handbrake assembly (1) according to claim 10, **characterised in that** the bearing pin (9) has at least one securing device, which is preferably realised as a melted area of the bearing pin (9).

12. Handbrake assembly (1) according to any of claims 1 to 11, where the handbrake lever (2) has a receiving orifice, in which a holding pin (16) for a brake cable (17) is securely held, **characterised in that** the holding pin (16) is a plastics part, the securing device preferably being realised as a melted area of the holding pin (16).

## Revendications

1. Installation de frein à main (1) comportant un levier de frein à main (2) équipé d'un dispositif de blocage (3) muni d'un segment de verrouillage (7) et d'un cliquet (8) venant en prise avec ce segment,
le cliquet (8) étant relié à une installation de déverrouillage (4),
le dispositif de blocage (3) étant au moins en partie en matière synthétique,
le segment de verrouillage (7) étant en partie en une matière synthétique, plastique ou déformable élastiquement, et
le levier de frein à main (2) étant monté pivotant par un tourillon de palier (9) dans un support de palier (5) solidaire du véhicule,
**caractérisée en ce que**
le segment de verrouillage (7) est relié au support de palier (5) par une première liaison par la forme (19),
cette première liaison par la forme (19) étant une liaison par enclipsage.

2. Installation de frein à main (1) selon la revendication 1,
**caractérisée en ce que**
la première liaison par la forme (19) comporte au moins un élément en forme de crochet (19a) de préférence sur le segment de verrouillage (7), cet élément coopérant de préférence avec une arête d'accrochage (19b) constituée par le support de palier (5).

3. Installation de frein à main (1) selon la revendication 1 ou 2,
**caractérisée en ce que**
le segment de verrouillage (7) est relié par une liaison par la forme au support de palier (5) par une seconde liaison par la forme (20) constituée par une liaison par enfichage.

4. Installation de frein à main (1) selon la revendication 3,
**caractérisée en ce que**
dans la zone de la seconde liaison par la forme (20), le segment de verrouillage (7) comporte un premier élément de liaison par la forme (20a) ayant une section de préférence polygonale et notamment rectangulaire coopérant avec un second élément de liaison par la forme (20b) du support de palier (5), qui a une forme complémentaire et est relié à celui-ci, le premier élément de liaison par la forme (20a) s'introduisant de préférence dans le second élément de liaison par la forme (20b).

5. Installation de frein à main (1) selon la revendication 4,
**caractérisée en ce que**
le premier élément de liaison par la forme (20a) et/ou le second élément de liaison par la forme (20b) comportent de préférence au moins une partie en saillie (2 1 a, 21 b) en forme de dents ou de barrettes, coopérant de préférence par une liaison par la force avec le second élément de liaison par la forme (20a, 20b) ayant une forme complémentaire.

6. Installation de frein à main (1) selon les revendications 3 à 5,
**caractérisée en ce que**
le premier et/ou le second élément de liaison par la forme (20a, 20b) et/ou la partie en saillie (21a, 21b) sont en forme de coin.

7. Installation de frein à main (1) selon les revendications 1 à 6,
**caractérisée en ce que**
le cliquet (8) est au moins en partie en matière synthétique.

8. Installation de frein à main (1) selon les revendications 1 à 7,
**caractérisée en ce que**
le cliquet (8) comporte au moins deux crochets de verrouillage (10).

9. Installation de frein à main (1) selon les revendications 1 à 8,
**caractérisée en ce que**
le cliquet (8) est renforcé dans sa zone de prise avec le segment de verrouillage (7), par un renforcement réalisé de préférence par une augmentation de sa largeur.

10. Installation de frein à main (1) selon les revendications 1 à 9,selon laquelle le levier de frein à main (2) est monté pivotant par un tourillon de palier (9) dans un support de palier (5) solidaire du véhicule,
**caractérisée en ce que**
le tourillon de palier (9) est en matière synthétique et est formé de préférence par un rivet en matière synthétique.

11. Installation de frein à main (1) selon la revendication 10,
**caractérisée en ce que**
le tourillon de palier (9) comporte au moins un moyen anti-perte, réalisé de préférence par une zone fusible du goujon de palier (9).

12. Installation de frein à main (1) selon les revendications 1 à 11, selon laquelle le levier de frein à main (2) comporte un orifice de réception recevant de manière protégée contre la perte, un goujon de fixation (16) pour un câble de frein (17),
**caractérisée en ce que**
le goujon de fixation (16) est réalisé comme pièce en matière synthétique et de préférence le moyen anti-perte est formé par la fusion du goujon de fixation (16).
